# EUROPÄISCHE PATENTSCHRIFT

(11) **EP 1 022 370 B1**
(45) Veröffentlichungstag und Bekanntmachung des Hinweises auf die Patenterteilung: **10.06.2009**
(21) Anmeldenummer: 99124903.8
(22) Anmeldetag: 14.12.1999
(51) Int. Cl.: D04H 13/00

(54) **Verfahren zur Herstellung oberflächenveredelter Faservliesformteile**
Process of manufacturing mouldings made of nonwoven fabrics treated on surface
Procédé de fabrication de pièces moulées en tissus non-tissés traités en surface

(30) Priorität: 25.01.1999 DE 19902669
(43) Veröffentlichungstag der Anmeldung: 26.07.2000
(73) Patentinhaber: Hexion Specialty Chemicals GmbH, 58642 Iserlohn-Letmathe (DE)
(72) Erfinder: Müller, Franz-Josef, 58642 Iserlohn (DE)

(56) Entgegenhaltungen:
- EP-A- 0 500 202
- EP-A- 0 657 257
- EP-A- 0 867 549
- US-A- 3 274 046
- US-A- 4 264 655

## Beschreibung

Die Erfindung betrifft die Herstellung von Formteilen aus Faservlies auf der Basis von Natur- und/oder Synthesefasern, bei denen zumindest eine der flächigen Oberflächen, in der Regel die Sichtseite, durch eine Beschichtung, insbesondere durch eine hochwertige Kaschierung veredelt ist.

Derartige Formteile werden unter anderem im Automobilbau eingesetzt.

Faservliesformteile sind flächige Formteile aus mit duroplastischem Harz, insbesondere mit Phenolharz oder Epoxidharz verfestigten Faservliesen, insbesondere aus Reißfasergut.
Zu ihrer Herstellung werden Faserstoff und Harzpulver miteinander vermischt, zu einem Vlies geformt und gegebenenfalls vorgehärtet (vorgefestigt). Die Härtung erfolgt bei flächiger Bahnenware unmittelbar nach der Vliesbildung im Ofen oder das vorgefestigte Vlies wird in Tafeln geschnitten und unter Anwendung von Druck in geheizten Preßformen unter Formgebung gehärtet. Danach werden die Formteile gestanzt (vergl. Kunststoff-Handbuch, Band 10 "Duroplaste", Hanser Verlag, 2.Auflage (1988), S. 763-775). Die Oberflächenveredelung kann während der Härtung des Faservlieses oder in einem zweiten, separaten Schritt erfolgen.

Bei der Kaschierung wird das später sichtbare Flächengebilde, das Kaschiermaterial, mit Hilfe thermoplastischer Kleber (Schmelzkleber) oder mit speziellen Kontaktklebstoffen mit dem nunmehr als tragende Basis dienenden Vliesstoff-Formteil verklebt.
Bei den Beschichtungsverfahren erfolgt ein Auftrag von pigmentierten, thermoplastischen Massen in Form von Pasten oder aus Lösungen.

In einem verbesserten Verfahren wird auf die Oberfläche des Kaschiermaterials eine pulverförmige, thermoplastische Mischung mit niedriger Schmelzviskosität aufgestreut, durch neuerliches Erhitzen aufgeschmolzen und danach abgekühlt. Dabei bildet sich auf der Oberfläche der Kaschierung eine einheitliche Beschichtung.

Der Nachteil dieser Verfahrens ist, daß die Rückstellkräfte des Kaschiermaterials im heißen Zustand oft stärker sind, als die Klebkraft des Schmelzklebers. Dies führt insbesondere bei geometrisch komplizierten Teilen zu Fehlstellen, an denen sich das Kaschiermaterial vom Untergrund ablöst. Die Ablöseeffekte treten verstärkt bei solchen Formteilen auf, die häufigen Temperaturschwankungen oder intensiver Sonnenbestrahlung ausgesetzt sind.

Es ist daher Aufgabe der Erfindung, ein Verfahren zur Oberflächenveredlung von Faservliesformteilen bereitzustellen, das zwar technisch ähnlich elegant und einfach durchgeführt werden kann, wie das genannte Schmelzbeschichtungsverfahren, bei dem aber der Nachteil der Ablöseeffekte nicht gegeben ist.

Die Lösung der Aufgabe erfolgt durch ein Verfahren gemäß der Ansprüche 1 bis 9.

Es wurde gefunden, daß eine hochwertige Oberflächenveredlung von Faservliesformteilen auch erhalten wird, wenn noch nicht ausgehärtete, bei Raumtemperatur klebfreie duroplastische Harze oder Harz-Härter-Mischungen als Kleber für die Kaschierung eingesetzt werden. Mit derartigem Kleber versehenes Kaschiermaterial wird auf das vorgefertigte Faservlies oder auf Faservlies-Formteile aufgebracht und das so erhaltene Gelege wird auf eine Temperatur, die über der Anspringtemperatur der Härtungsreaktion des Harzes oder des Harz-Härter-Gemisches liegt, erhitzt.
Die duroplastischen Harze härten dabei als Film, der sich bei der Härtungsreaktion mit der Faservlies-Oberfläche verbindet und eine flächige, irreversible Verklebung der Kaschierung ergibt, die auch bei extremen Temperaturunterschieden oder Sonnenbestrahlungen nicht zu Ablösungen führt.

Dies ist insofern überraschend, als die Schmelzviskosität von Duroplasten im allgemeinen höher ist als die von Thermoplasten und die angewendete Härtungstemperatur wesentlich über der Schmelztemperatur der bislang eingesetzten thermoplastischen Bindemittel liegt und daher die bei Druckentlastung im Preßwerkzeug auftretenden Rückstellkräfte wesentlich höher sind als beim Einsatz von Thermoplasten.

Duroplastische Harze sind in der Regel spröde. Es ist daher ein weiterer überraschender Effekt, daß die erfindungsgemäß mit duroplastischen Harzen beschichteten Kaschierungen auch beim Aufrollen oder Verformen beständig bleiben und nicht abplatzen.

Ein weiterer Vorteil des erfindungsgemäßen Verfahrens besteht darin, daß die Oberflächenveredlung der Faservliesformteile sowohl dadurch erfolgen kann, daß die noch nicht ausgehärteten duroplastischen Harze oder Harz-Härter-Gemische sowohl auf die vorgefertigten Vliesstoff-Formteile aufgebracht werden können, als auch auf das Kaschiermaterial. Außerdem besteht bei dieser Verfahrensdurchführung die Möglichkeit, daß im Grenzbereich die zur Oberflächenveredlung eingesetzten duroplastischen Harze mit den als Bindemittel der Textilfasern verwendeten Harzen vernetzen. Dies ist insbesondere dann der Fall, wenn sowohl zur Bindung der Fasern als auch zur Oberflächenvergütung der Formteile die gleichen oder miteinander reagierende Harze eingesetzt werden.

Durch diese Vernetzungsreaktionen im Grenzbereich wird als weiterer Vorteil die Stabilität der Formteile erhöht.

Erfindungsgemäß wird daher duroplastisches Harz bzw. Harz-Härter-Gemisch und ein Kaschiermaterial auf die zu veredelne(n) Oberfläche(n) vorgefertigter Formteile aufgebracht und die so erhaltenen Einheiten (Gelege) auf Temperaturen erhitzt, die über dem Schmelzpunkt und über der Anspringtemperatur der Härtungsreaktion der duroplastischen Harze liegen. Nach dem Härten der duroplastischen Harze werden die erhaltenen oberflächenveredelten Teile in an sich bekannter Weise weiterverarbeitet.

Eine weitere Vereinfachung des gesamten Herstellungsprozesses erfolgt dadurch, daß duroplastisches Harz, Harz-Härter-Gemisch und ein Kaschiermaterial auf die zu veredelnde(n) Oberfläche(n) vorgefertigter oder vorgefestigter Faservliese aufgebracht wird. Die so hergestellten Teile (Gelege) werden unter Druck und Formgebung auf Temperaturen, die über dem Schmelzpunkt und über der Anspringtemperatur der Härtungsreaktion der in der Beschichtung eingesetzten Harze und über der Anspringtemperatur der als Bindemittel im Vlies eingesetzten Harze liegen, erhitzt. Dabei härten gleichzeitig die Bindemittel im Vlies und die Harze in der Beschichtung und, sofern die Bindemittel im Vlies und die Harze der Beschichtung miteinander identisch sind oder miteinander reagieren können, erfolgt im Grenzbereich eine Vernetzung dieser Duroplasten miteinander.
Nach der Härtung der Beschichtung und der Bindemittel im Vlies werden die erhaltenen Teile in an sich bekannter Weise weiter verarbeitet.

Bei der Oberflächenveredlung in Verbindung mit einem Kaschiermaterial ist folgende Verfahrensvariante möglich:
- Das duroplastische Harz oder Harz-Härter-Gemisch wird auf Kaschiermaterial aufgebracht und auf eine Temperatur erwärmt, die über der Schmelztemperatur aber unterhalb der Anspringtemperatur der Härtungsreaktion des Harzes liegt. Dabei wird das Harz aufgeschmolzen und verteilt sich zu einer dünnen Schicht. Das so mit Kleber versehene Kaschiermaterial wird entweder direkt oder nach einer zwischengeschalteten Akühlung und Wiedererwärmung auf noch nicht thermisch behandeltes oder vorgefestigtes Faservlies aufgebracht und anschließend wird, gegebenenfalls unter Formgebung, das so hergestellte Produkt (Gelege) auf eine Temperatur oberhalb der Anspringtemperatur der Härtung des Harzes erhitzt und nach der Härtung des duroplastischen Harzes abgekühlt und in an sich bekannter Weise weiterverarbeitet.

Bei dieser Variante ist es vorteilhaft, als duroplastisches Harz für die Beschichtung ein mit Formaldehyd härtbares Harz, insbesondere einen härter-freien Novolak oder härter-freien modifizierten Novolak einzusetzen, wenn das Bindemittel im Faservlies ein Gemisch aus einem mit Formaldehyd härtbaren Harz und einem in der Wärme Formaldehyd freisetzenden Stoff, etwa ein Novolak-Hexamethylentetramin-Gemisch ist. Der bei der Härtung dieses Bindemittels freiwerdende Formaldehyd ist ausreichend, auch den in dünner Schicht aufgeschmolzenen Novolak zu härten.
Es ist ein weiterer Vorteil dieser Verfahrensvariante, daß dabei Formaldehydemissionen bei der Fertigung wesentlich vermindert werden.

Dadurch ergeben sich folgende bevorzugte Verfahrensdurchführungen:
- Mit einem mit Formaldehyd härtbaren, duroplastischen Harz oder Harzgemisch als Kleber versehenes Kaschiermaterial wird in einer kontinuierlichen Fertigung als Endlosbahn auf das vorgefertigte oder vorgefestigte, ein mit Formaldehyd härtbares Harz und einen in der Wärme Formaldehyd freisetzenden Härter enthaltende Faservlies aufgebracht und das erhaltene Gelege danach unter Druck bei einer Temperatur, die über der Anspringtemperatur der Härtungsreaktion des im Faservlies verwendeten Bindemittels und der des Klebers liegt, gehärtet, wobei aus der Härtungsreaktion des Bindemittels freiwerdender Formaldehyd als Härter für den Kleber dient. Es wird dabei eine voll ausgehärtete Bahnenware erhalten, aus der Platten in gewünschter Größe und Form gestanzt oder ausgeschnitten werden.
- Mit einem mit Formaldehyd härtbaren, duroplastischen Harz oder Harzgemisch als Kleber versehenes Kaschiermaterial wird in einer kontinuierlichen Fertigung als Endlosbahn auf ein mit Formaldehyd härtbares Harz und einen in der Wärme Formaldehyd freisetzenden Härter enthaltendes vorgefestigtes oder nur vorgefertigtes Faservlies aufgebracht und das erhaltene Gelege danach bei einer Temperatur, die über der Schmelztemperatur des Klebers und, sofern ein noch nicht vorgefestigtes Faservlies eingesetzt wird, über der Schmelztemperatur des als Bindemittel eingesetzten Harzes liegt, getempert und danach gekühlt und anschließend gestanzt oder zugeschnitten. Das gestanzte oder zugeschnittene Gelege (Halbzeug) wird anschließend unter Druck und Formgebung bei einer Temperatur, die über der Anspringtemperatur der Härtungsreaktion des im Faservlies verwendeten Bindemittels und der des Klebers liegt, gehärtet, wobei aus der Härtungsreaktion des Bindemittels freiwerdender Formaldehyd als Härter für den Kleber dient.
- Alternativ wird mit einem mit Formaldehyd härtbaren, duroplastischen Harz als Kleber versehenes Kaschiermaterial in einer diskontinuierlichen Fertigung in zugeschnittener Form auf das vorgefertigte bzw. vorgefestigte und zugeschnittene, ein mit Formaldehyd härtbares Harz und einen in der Wärme Formaldehyd freisetzenden Härter enthaltende Faservlies aufgebracht und das erhaltene Gelege danach bei einer Temperatur, die über der Anspringtemperatur der Härtungsreaktion des im Faservlies verwendeten Bindemittels und der des Klebers liegt, gehärtet, wobei aus der Härtungsreaktion des Bindemittels freiwerdender Formaldehyd als Härter für den Kleber dient.

Der bei diesen Verfahren angewandte Druck liegt in der gleichen Größenordnung wie er bislang bei entsprechenden Verfahren gemäß dem Stand der Technik angewandt wird.

Für das erfindungsgemäße Verfahren kann das gleiche Fasergut verwendet werden, das auch zur Herstellung herkömmlich gefertigter Faservliesformteile eingesetzt wird. Es ist dies im wesentlichen Reißfasergut aus der Wiederaufarbeitung von Textilien und besteht vorwiegend aus Baumwoll- oder Polyesterfasern, enthält aber in der Regel auch andere Fasern wie z.B. Wolle, Jute, Flachs, Sisal, Polyamid- oder Acrylfasern. Die Fasern können an sich bekannte Zusatzstoffe wie z.B. Schmälzmittel, Avivagen, Fungistatika oder Hydrophobierungsmittel enthalten. Desgleichen können als Fasermaterial auch anorganische Fasern eingesetzt werden.

Auch die Herstellung der vorgefestigten Faservliese oder der Faservliesformteile erfolgt in an sich bekannter Weise, wie dies u.a. im Kunststoffhandbuch Bd. 10 "Duroplaste, S. 766 bis 768 beschrieben wird.

Als Kaschiermaterialien können ebenfalls alle die flächigen Gebilde, wie z.B. hochwertige Vliese, Gewirke und Gewebe eingesetzt werden, wie sie bislang zur Kaschierung von Faservliesformteilen eingesetzt werden, sofern sie ausreichend temperaturstabil sind, daß sie bei Härtungstemperaturen der duroplastischen Harze nicht geschädigt werden.

Für die Verklebung der Kaschierungen eignen sich im Prinzip alle bei Raumtemperatur klebfreien, duroplastischen Harze oder Harz-Härter-Gemische die mit Formaldehyd härten sowie diese Harze und gegebenenfalls Härter enthaltende Mischungen mit an sich bekannten modifizierenden Harzen. Beispiele für diese härtbaren Harze sind Epoxidharze, ungesättigte Polyester, Harnstoff-Formaldehyd-, Melanin-Formaldeyd-, Melanin-Phenol-Formaldehyd- oder Phenol-Aldehyd-Harze sowie Kombinationen dieser Harze miteinander sowie mit anderen modifizierenden Harzen, insbesondere mit 5-50% flexiblisierenden Harzen wie z. B. Polyvinylbutyral, Polyvinylalkoholen oder Phenoxyharzen. Bevorzugt sind Phenol-Formaldehyd-Harze.

Die direkte Beschichtung der Faservliesformteile, der nicht gehärteten bzw. der vorgefestigten Faservliese oder der Kaschiermaterialien erfolgt nach an sich bekannten Verfahren, durch Streu-, Walz- Spachtel-, Gieß-, Tauch- oder Sprühverfahren unter entsprechenden Pasten, wäßrigen Dispersionen oder Lösungen in organischen Lösemitteln.

Die bevorzugte Beschichtung erfolgt nach dem Pulververfahren. Dabei werden die duroplastischen Harze oder Harz-Härter-Gemische in Form fein gemahlener Pulver auf die zu beschichtenden Oberflächen aufgebracht. Hierfür eignen sich insbesondere Harze oder Harz-Härter-Gemische, deren Schmelzviskosität beim nachfolgenden Erhitzen so niedrig ist, daß der Untergrund ausreichend benetzt wird. Die bevorzugte Schmelzviskosität, gemessen bei 175°C beträgt weniger als 1000 mPas. Beim diesem kurzzeitigen Erhitzen über den Schmelzpunkt der duroplastischen Harze , bevorzugt mittels IR-Strahlern. bildet sich auf dem Textilvlies oder Kaschiermaterial ein dünner, geschlossener Film des Harzes oder Harz-Härter-Gemischs, der rasch abgekühlt und damit fest und klebfrei wird.
Im darauffolgenden Prozeßschritt werden Faservlies und Kaschiermaterial nach einer der vorbeschriebenen Verfahrensdurchführungen miteinander vereinigt und unter Anwendung von Druck und Temperatur miteinander verbunden. Danach wird das erhaltene Formteil abgekühlt und in an sich bekannter Weise weiter verarbeitet.

### Beispiel 1

Das im Beispiel zur Oberflächenveredlung eingesetzte duroplastische Harz ist ein mit 10 % Phenoxyharz modifizierter Phenolnovolak mit einem Schmelzpunkt von 70°C und einer Schmelzviskosität, gemessen bei 175°C, von 420 mPas.

Durch aerodynamische Vliesbildung wird ein noch nicht gehärtetes Textilvlies mit einem Gehalt an 25% Phenolnovolak-Hexamethylentetramin als Bindemittel hergestellt (Basisvlies). Diesem Faservlies wird ein einseitig mit einer dünnen Schicht (20 g/m²) des modifizierten Phenol-Novolaks beschichtetes, optisch hochwertiges Vlies (40 g/m²) (Deckvlies) zugeführt und mittels Wärme (75°C) in einem Ofen auf dem Basisvlies fixiert.
Danach wird das so kaschierte Vlies in einem 180-220°C heißen Werkzeug einem Formgebungs- und Härtungsprozeß unterworfen. Dabei wird aus dem im Basisvlies als Härtungsmittel vorhandenen Hexamethylentetramin so viel Formaldehyd freigesetzt, daß die auf der Innenseite des aufkaschierten Deckvlieses vorhandene dünne Phenol-Novolak-Schicht mit ausgehärtet wird. Es entsteht ein Textilvliesformteil mit einer duroplastisch verklebten, die Oberfläche veredelnden Schicht. Als weiterer Vorteil dieser Verfahrensführung wird eine deutliche Reduzierung der aus dem Basisvlies resultierenden Formaldehydemission festgestellt.

## Patentansprüche

1. Verfahren zur Herstellung oberflächenveredelter Faservliesformteile durch Beschichtung der zu veredelnden Oberfläche(n) mit einem Kaschiermaterial, **dadurch gekennzeichnet, dass** das Kaschiermaterial ein klebfreies duroplastisches mit Formaldehyd härtbares Harz als Kleber aufweist, das Faservlies ein Bindemittel aufweist, was ein duroplastisches mit Formaldehyd härtbares Harz und in der Wärme einen Formaldehyd freisetzenden Härter enthält, und zur Härtung des Klebers das aus dem Faservlies freiwerdende Formaldehyd des Bindemittels verwendet wird.

2. Verfahren nach Anspruch 1, **dadurch gekennzeichnet, dass** das Kaschiermaterial in einer kontinuierlichen Fertigung als Endlosbahn auf das vorgefertigte oder vorgefestigte Faservlies aufgebracht wird und das erhaltene Gelege danach unter Druck bei einer Temperatur, die über der Anspringtemperatur der Härtungsreaktion des im Faservlies verwendeten Bindemittels und der des Klebers liegt, gehärtet wird.

3. Verfahren nach Anspruch 1, **dadurch gekennzeichnet, dass** das Kaschiermaterial in einer kontinuierlichen Fertigung als Endlosbahn auf das vorgefertigte oder vorgefestigte Faservlies aufgebracht wird und das erhaltene Gelege danach bei einer Temperatur die über der Schmelztemperatur des Klebers und gegebenenfalls des im Faservlies verwendeten Bindemittels liegt, getempert und danach gekühlt und anschließend gestanzt oder zugeschnitten wird, das gestanzte oder zugeschnittene Gelege anschließend unter Druck und Formgebung bei einer Temperatur, die über der Anspringtemperatur der Härtungsreaktion des im Faservlies verwendeten Bindemittels und der des Klebers liegt, gehärtet wird.

4. Verfahren nach Anspruch 1, **dadurch gekennzeichnet, dass** das Kaschiermaterial in einer diskontinuierlichen Fertigung in zugeschnittener Form auf das vorgefertigte oder vorgefestigte oder vorgefertigt und zugeschnittene oder vorgefestigt und zugeschnittene Faservlies aufgebracht wird und das erhaltene Gelege danach unter Druck bei einer Temperatur, die über der Anspringtemperatur der Härtungsreaktion des im Faservlies verwendeten Bindemittels und der des Klebers liegt, gehärtet wird.

5. Verfahren nach zumindest einem der vorhergehenden Ansprüche, **dadurch gekennzeichnet, dass** das als Kleber eingesetzte Harz ein hexamethylenfreier Novolak ist.

6. Verfahren nach zumindest einem der vorhergehenden Ansprüche, **dadurch gekennzeichnet, dass** das als Kleber eingesetzte Harz ein modifiziertes Phenolharz ist.

7. Verfahren nach Anspruch 6, **dadurch gekennzeichnet, dass** das als Kleber eingesetzte Harz ein mit Phenoxyharz modifiziertes Phenolharz ist.

8. Verfahren nach zumindest einem der vorhergehenden Ansprüche, **dadurch gekennzeichnet, dass** die Beschichtung des Kaschiermaterials mittels Pulververfahrens erfolgt.

9. Verfahren nach zumindest einem der vorhergehenden Ansprüche, **dadurch gekennzeichnet, dass** die Schmelzviskosität des Harzes, gemessen bei 175 °C kleiner ist als 1000 mPas.

## Claims

1. Process for producing surface-enhanced moulded fibre parts by using a laminating material to coat the surface(s) to be enhanced, **characterized in that** the laminating material comprises, as adhesive, a tack-free thermoset resin which can be cured using formaldehyde, the fibre web comprises a binder which comprises a thermoset resin which can be cured using formaldehyde and a hardener that releases formaldehyde when heated, and the formaldehyde of the binder released from the fibre web is used for the curing of the adhesive.

2. Process according to Claim 1, **characterized in that**, in a continuous production process and in the form of a continuous web, the laminating material is applied to the prefabricated or prehardened fibre web, and the resultant laminated article is then cured under pressure at a temperature above the initiation temperature for the curing reaction of the binder used in the fibre web and that of the adhesive.

3. Process according to Claim 1, **characterized in that,** in a continuous production process and in the form of a continuous web, the laminating material is applied to the prefabricated or prehardened fibre web, and the resultant laminated article is then annealed at a temperature above the melting point of the adhesive and, if desired, of the binder used in the fibre web, and then cooled and then stamped out or cut to shape, and the laminated article which has been stamped out or cut to shape is then cured under pressure, with shaping, at a temperature above the initiation temperature for the curing reaction of the binder used in the fibre web and that of the adhesive.

4. Process according to Claim 1, **characterized in that,** in a batchwise process, the cut-to-shape laminating material is applied to the prefabricated or prehardened or prefabricated and cut-to-shape or prehardened and cut-to-shape fibre web, and the resultant laminated article is then cured under pressure at a temperature above the initiation temperature for the curing reaction of the binder used in the fibre web and that of the adhesive.

5. Process according to at least one of the preceding claims, **characterized in that** the resin used as adhesive is a hexamethylene-free novolac.

6. Process according to at least one of the preceding claims, **characterized in that** the resin used as adhesive is a modified phenolic resin.

7. Process according to Claim 6, **characterized in that** the resin used as adhesive is a phenoxy-resin-modified phenolic resin.

8. Process according to at least one of the preceding claims, **characterized in that** a powder method is used for the coating of the laminating material.

9. Process according to at least one of the preceding claims, **characterized in that** the melt viscosity of the resin, measured at 175°C, is less than 1000 mPas.

## Revendications

1. Procédé pour la préparation de pièces moulées en non-tissé de fibres, à surface anoblie par revêtement de la/des surface(s) à anoblir par un matériau de contre-collage, **caractérisé en ce que** le matériau de contre-collage présente une résine thermodurcissable sans adhésif, durcissable avec du formaldéhyde comme adhésif, le non-tissé en fibres présente un liant qui contient une résine thermodurcissable durcissable avec du formaldéhyde et un durcisseur libérant du formaldéhyde à la chaleur et on utilise, pour le durcissement de l'adhésif, le formaldéhyde du liant libéré du non-tissé en fibres.

2. Procédé selon la revendication 1, **caractérisé en ce que** le matériau de contre-collage est appliqué dans un mode de réalisation continu sous forme de bande sans fin sur le non-tissé en fibres réalisé ou solidifié au préalable et le mat obtenu est ensuite durci sous pression à une température qui est supérieure à la température de démarrage de la réaction de durcissement du liant utilisé dans le non-tissé en fibres et à celle de l'adhésif.

3. Procédé selon la revendication 1, **caractérisé en ce que** le matériau de contre-collage est appliqué dans un mode de réalisation continu sous forme de bande sans fin sur le non-tissé en fibres réalisé ou solidifié au préalable et le mat obtenu est ensuite traité thermiquement à une température qui est supérieure à la température de fusion de l'adhésif et le cas échéant du liant utilisé dans le non-tissé en fibres, puis est refroidi et ensuite poinçonné ou découpé, le mat poinçonné ou découpé est ensuite durci sous pression et avec façonnage à une température qui est supérieure à la température de démarrage de la réaction de durcissement du liant utilisé dans le non-tissé en fibres et à celle de l'adhésif.

4. Procédé selon la revendication 1, **caractérisé en ce que** le matériau de contre-collage est appliqué dans un mode de réalisation discontinu sous forme découpée sur le non-tissé en fibres réalisé au préalable ou solidifié au préalable ou réalisé au préalable et découpé ou solidifié au préalable et découpé et le mat obtenu est ensuite durci sous pression à une température qui est supérieure à la température de démarrage de la réaction de durcissement du liant utilisé dans le non-tissé en fibres et à celle de l'adhésif.

5. Procédé selon au moins l'une quelconque des revendications précédentes, **caractérisé en ce que** la résine utilisée comme adhésif est une novolaque exempte d'hexaméthylène.

6. Procédé selon au moins l'une quelconque des revendications précédentes, **caractérisé en ce que** la résine utilisée comme adhésif est une résine phénolique modifiée.

7. Procédé selon la revendication 6, **caractérisé en ce que** la résine utilisée comme adhésif est une résine phénolique modifiée avec une résine phénoxy.

8. Procédé selon au moins l'une quelconque des revendications précédentes, **caractérisé en ce que** le revêtement du matériau de contre-collage est réalisé au moyen du procédé par poudres.

9. Procédé selon au moins l'une quelconque des revendications précédentes, **caractérisé en ce que** la viscosité de la masse fondue de la résine, mesurée à 175°C, est inférieure à 1000 mPa.s.
